# EUROPÄISCHE PATENTSCHRIFT

(11) **EP 2 882 518 B1**
(45) Veröffentlichungstag und Bekanntmachung des Hinweises auf die Patenterteilung: **07.09.2016**
(21) Anmeldenummer: 13742196.2
(22) Anmeldetag: 22.07.2013
(51) Int. Cl.: B01D 53/50, B01D 53/64, B01D 53/86, B01D 53/78

(54) **VERFAHREN ZUM ENTFERNEN VON SCHWEFELDIOXID UND QUECKSILBER AUS RAUCHGAS IN EINEM NASSWÄSCHER**
METHOD FOR REMOVING SULFUR DIOXIDE AND MERCURY FROM FLUE GAS IN A WET SCRUBBER
PROCÉDÉ D'ÉLIMINATION DE DIOXYDE DE SOUFRE ET DE MERCURE À PARTIR D'UN GAZ DE COMBUSTION DANS UN LAVEUR À VOIE HUMIDE

(30) Priorität: 08.08.2012 DE 102012214065
(43) Veröffentlichungstag der Anmeldung: 17.06.2015
(73) Patentinhaber: EnBW Energie Baden-Württemberg AG, 76131 Karlsruhe (DE); Vattenfall Europe Generation AG & Co. KG, 03050 Cottbus (DE)
(72) Erfinder: THORWARTH, Harald, 72074 Tübingen (DE); RUFF, Gerhard, 74248 Elhofen (DE); STRAUß, Josef-Herbert, 73249 Wernau (DE); LANGE, Peter, 04275 Leipzig (DE); STAHR, Andreas, 04651 Bad Lausick (DE); HOERTINGER, Thomas, 03048 Cottbus (DE); HILBERT, Lothar, 04552 Borna (DE)
(74) Vertreter: DREISS Patentanwälte PartG mbB
(86) Internationale Anmeldenummer: PCT/EP2013/065444
(87) Internationale Veröffentlichungsnummer: WO 2014/023565

(56) Entgegenhaltungen:
- EP-A2- 0 292 083
- WO-A1-2006/096993
- WO-A1-2010/036436
- WO-A1-2010/036668
- WO-A1-2012/106007
- US-A1- 2010 329 955

## Beschreibung

Die Erfindung betrifft ein Verfahren zur Abscheidung von Schwefeldioxid und Quecksilber aus Rauchgas nach dem Oberbegriff des Anspruchs 1.

Um die in den bei der Verbrennung von Kohle entstehenden Rauchgasen enthaltenen Schadstoffe, wie zum Beispiel Stickoxide, Schwefeldioxid und Asche, aus dem Rauchgas zu entfernen, sind dem Kessel eines Kraftwerks in der Regel ein Elektrofilter zur Abscheidung von der Flugasche, sowie ein Nasswäscher zur Rauchgasentschwefelung angeschlossen.

Die eingesetzten Brennstoffe enthalten neben den brennbaren Bestandteilen auch nicht brennbare Bestandteile, wie z.B. Quecksilber. Deshalb sind in den Rauchgasen nicht nur die aus den brennbaren Bestandteilen entstehenden Verbrennungsprodukte, sondern auch Spurenelemente wie Quecksilber in einem geringen Anteil enthalten. Man ist bestrebt, das in den Rauchgasen enthaltene Quecksilber möglichst effizient und kostengünstig aus den Rauchgasen zu entfernen. Aus dem Stand der Technik sind unter Anderem folgende Lösungsansätze bekannt.

Aus der DE 41 23 258 C2 ist ein Verfahren zum Reinigen eines Abgases, das Schwefeldioxid und andere Schadstoffe enthält, bekannt. Dabei wird eine Nasswäsche mit einer calciumhaltigen Waschflüssigkeit durchgeführt bei der das dadurch gebildete Calciumsulfit unter Zufuhr von Luft in Calciumsulfat (Gips) umgewandelt wird. Danach wird calciumsulfathaltige Waschflüssigkeit abgezogen und aus der abgezogenen Waschflüssigkeit Gips abgetrennt. Der Waschflüssigkeit wird eine das Quecksilber in eine wasserunlösliche Verbindung überführende Chemikalie zugegeben. Die dabei entstehende wasserunlösliche und sich in der ausgefällten Form von der Form der Gipskristalle unterscheidende Verbindung wird bei der Abtrennung des Gipses von der abgezogenen Waschflüssigkeit mit dem Abwasser abgeführt.

Aus der DE 10 2004 044 291 B4 ist ein Verfahren zur Rauchgasreinigung bekannt bei dem einem ersten Wäscher ein spezielles Hg-Fällungsmittel zugegeben wird.

Aus der EP 2 033 702 B1 ist ein Verfahren zur Rauchgasreinigung bekannt, das ein Adsorptionsmittel einsetzt, um das im Rauchgas enthaltene Quecksilber aus ersterem zu entfernen. Anschließend wird das Adsorptionsmittel regeneriert, welches in den Sumpf des REA-Wäschers geleitet wird. Dieses Verfahren ist durchaus wirkungsvoll. Allerdings sind der apparative und damit auch der wirtschaftliche Aufwand zur Durchführung des Verfahrens relativ hoch. Dieser relativ hohe apparative Aufwand ist darin begründet, dass das eingesetzte Adsorptionsmittel, nachdem es das in den Rauchgasen ursprünglich enthaltene Quecksilber adsorbiert hat, wieder regeneriert wird. In anderen Worten: das Quecksilber wird von dem Adsorptionsmittel wieder getrennt und das regenerierte Adsorptionsmittel wird anschließend getrennt vom Quecksilber entsorgt.

Aus der US 2010/0329955 A1, der nachveröffentlichten WO 2012/106007 A1, der WO 2010/036436 A1, der WO 2006/096993 A1, der WO 2010/036668 A1 und der EP 0 292 083 sind weitere Verfahren zur Rauchgasreinigung bekannt.

Der Erfindung liegt die Aufgabe zugrunde, ein Verfahren zum Entfernen von Quecksilber aus Rauchgasen bereitzustellen, dessen Leistungsfähigkeit größer ist, dessen apparativer Aufwand und dessen wirtschaftlicher Aufwand geringer ist und bei dem die Betriebskosten gegenüber dem aus dem Stand der Technik bekannten Verfahren verbessert sind.

Diese Aufgabe wird erfindungsgemäß bei einem Verfahren zum Entfernen von Quecksilber aus Rauchgasen, bei dem die Rauchgase in einen Nasswäscher eingeleitet werden, in welchem das in den Rauchgasen enthaltene Quecksilber und das in den Rauchgasen enthaltene Schwefeldioxid in eine kalkmilchhaltige Waschflüssigkeit übergeht, dadurch gelöst, dass die Waschflüssigkeit neben der Kalkmilch noch das Nebenprodukt eines anderen Prozesses, insbesondere eines Verbrennungsprozesses, und/oder einen geringen Anteil von Kohlenstoff- und/oder Schwefelverbindungen enthält.

Es hat sich bei Versuchen herausgestellt, dass zum Beispiel durch den Einsatz von Kalkmilch, die einen geringen Anteil Kohlenstoff und weiterer aktiver Komponenten, wie z.B. Schwefelverbindungen von beispielsweise weniger als 1% enthält, eine signifikant höhere Abscheiderate des Quecksilbers aus den Rauchgasen erreicht wird.

Alternativ dazu wird Kalkmilch eingesetzt, die bei einem anderen chemischen Produktionsprozess als Nebenprodukt, insbesondere Kalkmilch aus Azetylen-Erzeugungsanlagen, anfällt und geringe Mengen (< 1 Gew.-%) Kohlenstoff und weiterer aktiver Komponenten wie z.B. Schwefelverbindungen enthält. Auf diese Weise wird ein Nebenprodukt, welches anderenfalls kostenaufwendig entsorgt werden müsste, einer sinnvollen Verwertung zugeführt.

Ohne die einzelnen chemischen Reaktionen in dem Nasswäscher, der mit einer erfindungsgemäßen Waschflüssigkeit betrieben wird, in allen Details zu erläutern, belegen die bei Versuchen durchgeführten Messungen, dass eine auf solche Weise modifizierte Kalkmilch die Abscheiderate deutlich verbessert.

Anstelle eines geringen Anteils an Kohlenstoff können auch Nebenprodukte eines anderen Prozesses, insbesondere eines Verbrennungsprozesses, in geringen Mengen der Kalkmilch zugesetzt werden. Wenn Nebenprodukte eines Verbrennungsprozesses der Kalkmilch zugesetzt werden, dann sind diese Verbrennungsprodukte Aschen, die sich bei durchgeführten Versuchen ebenfalls als geeignet erwiesen haben. Besonders vorteilhafte Nebenprodukte anderer Prozesse sind in den Unteransprüchen beansprucht.

In weiterer vorteilhafter Ausgestaltung des erfindungsgemäßen Verfahrens ist vorgesehen, dass aus dem Wäschersumpf Suspension entnommen wird, und dass in einem ersten Abscheider ein Großteil der Feststoffe, insbesondere Gips und die ursprünglich in der Kalkmilch enthaltenen Nebenprodukte und/oder der ursprünglich in der Kalkmilch enthaltene Kohlenstoff abgeschieden werden, und dass ein Großteil des in der Suspension enthaltenen Wassers dem Nasswäscher wieder zugeführt wird. Dadurch ist es möglich, dass die für die verbesserte Abscheidung von Quecksilber verantwortlichen Nebenprodukte bzw. die geringen Kohlenstoffanteile getrennt vom Gips aus der Suspension abgeschieden werden. Aufgrund der sehr geringen Anteile von Nebenprodukten bzw. von Asche oder Kohle, welche im Gips verbleiben, wird die Qualität des produzierten Gipses nicht beeinträchtigt.

Weil diese Verfahrensführung sehr einfach ist und nicht zwingend zusätzliche Apparate erfordert, kann durch den Einsatz der erfindungsgemäßen Waschlösung die Abscheiderate des Quecksilbers signifikant erhöht werden, ohne nennenswerte zusätzliche Betriebskosten zu verursachen. Konstruktive Änderungen an dem Nasswäscher sind nicht oder nur in unbedeutendem Maße erforderlich.

Um eine weitere Verbesserung der Abscheiderate des Quecksilbers aus den Rauchgasen zu erreichen, kann vorgesehen sein, dass der Waschflüssigkeit ein Fällungsmittel, wie z.B. TMT15, oder ein anderes geeignetes Fällungsmittel, und optional ein Flockungshilfsmittel zugegeben wird. Durch dieses Fällungsmittel werden in der Waschflüssigkeit enthaltene Quecksilberionen ausgefällt. Dabei entstehen schwerlösliche Quecksilberverbindungen, die dann durch das Flockungshilfsmittel zu größeren Partikeln koaguliert und anschließend aus der Waschflüssigkeit abgeschieden werden können. Dadurch wird verhindert, dass sich Quecksilber in das Calciumsulfat (Gips) einlagert. Somit kann in einfacher Weise ein quecksilberhaltiger Abfallschlamm vom Gips getrennt werden, so dass der Gips als Produkt zu einer Wertschöpfung des Prozesses beiträgt.

Es ist offensichtlich, dass das Fällungsmittel an jeder beliebigen Stelle dem Waschflüssigkeitskreislauf zugeführt werden kann. Besonders bevorzugt ist dabei das Fällungsmittel so nah wie möglich an der Sprühebene zuzusetzen. Grund hierfür ist, dass Sulfit zu einer Reduktion von oxidiertem zu elementarem Quecksilber beitragen kann. Über die Absorberhöhe ist direkt nach der Sprühebene mit den höchsten Sulfit-Konzentrationen zu rechnen. Um eine durch Sulfit induzierte Reduktion und damit eine Freisetzung von elementarem Quecksilber vor einer möglichen Fällung zu verhindern ist das Fällungsmittel möglichst nah an der Sprühebene zuzusetzen.

Eine weitere vorteilhafte Ausgestaltung sieht vor, einem Teil der Waschflüssigkeit, welche aus dem REA-Wäscher abgezogen und in einem zweistufigen Prozess vom Gips getrennt wird, das Fällungsmittel und optional das Flockungsmittel zuzusetzen. Dadurch wird eine weitere Reduktion des Quecksilbergehalts in der Waschflüssigkeit erreicht und infolgedessen verbessert sich die Abscheiderate des Quecksilbers, aufgrund des größeren treibenden Gefälles in dem Nasswäscher, weiter. Zum Anderen kann die Waschflüssigkeit beispielweise zur Reinigung des Tropfenabscheiders eingesetzt werden, so dass dadurch eine Einsparung von Frischwasser erzielt wird.

Es versteht sich von selbst, dass der Verbrauch an Kalkmilch und/oder der Nebenprodukte bzw. der Kohle beim laufenden Betrieb während der Durchführung des Verfahrens kontinuierlich oder in geeigneten Intervallen nachgeliefert werden muss, um einen stabilen Betrieb des Nasswäschers zu gewährleisten.

Es hat sich bei praktischen Versuchen als ausreichend erwiesen, wenn der Kohlenstoffanteil bzw. der Anteil an Nebenprodukten in der Waschflüssigkeit kleiner 5 Gewichtsprozent, bevorzugt kleiner 3 Gewichtsprozent [Gew.-%] und besonders bevorzugt kleiner 1 Gewichtsprozent ist. Es ist dabei immer eine Abwägung zwischen einerseits einer möglichst hohen Abscheiderate und andererseits einer möglichst geringen Verunreinigung des entstehenden Gipses zu treffen. Pauschale Empfehlungen können hier nur im Rahmen der genannten Obergrenzen gegeben werden. Im Einzelfall ist die optimale Dosierung durch Versuche zu ermitteln.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: Umgebung der Erfindung,
- Figur 2: schematische Darstellung eines Nasswäschers,
- Figur 3: schematische Darstellung eines Nasswäschers mit integrierter Wasseraufbereitung.

Es werden für funktionsäquivalente Elemente und Größen in allen Figuren auch bei unterschiedlichen Ausführungsformen die gleichen Bezugszeichen verwendet.

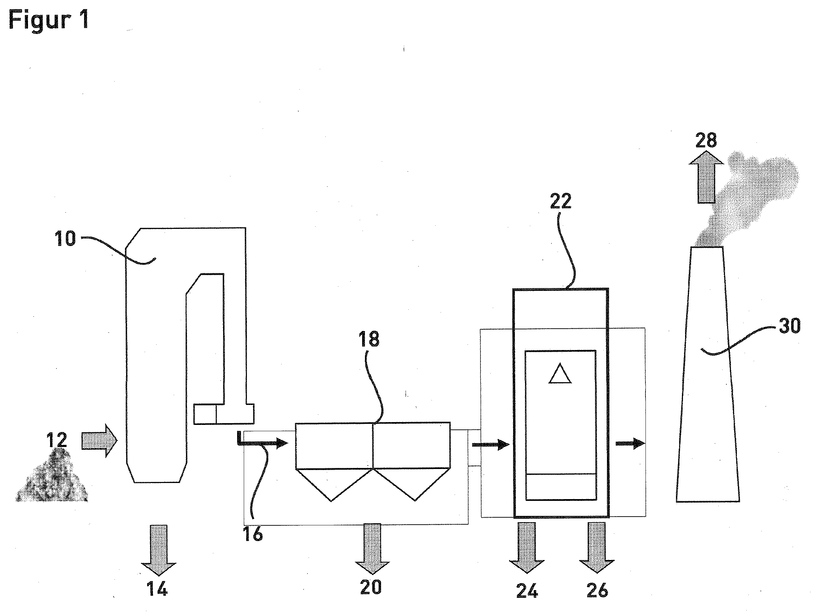

Figur 1 zeigt eine schematische Darstellung der Stoffströme in einem Kraftwerk mit Rauchgasnachbehandlung. Ein Kessel trägt in Figur 1 das Bezugszeichen 10. Dem Kessel 10 wird Brennstoff 12, wie zum Beispiel Kohle, zugeführt und verbrannt. Bei der Verbrennung entstehen unter anderem Kesselasche 14 (oder sog. Nassasche) und Flugasche enthaltendes Rauchgas 16. Wenn in dem Brennstoff 12 Spuren von Quecksilber vorhanden sind, dann gelangt dieses Quecksilber ebenfalls in das Rauchgas 16.

Das Rauchgas 16 durchströmt zunächst einen Elektrofilter 18. In dem Elektrofilter 18 werden die in dem Rauchgas 16 mitgeführten Feststoffpartikel als Flugasche 20 abgeschieden. Durch Zugabe pulverförmiger Sorbtionsmittel in das Rauchgas 16, vor dessen Eintritt in den Elektrofilter 18, kann gasförmiges Quecksilber (Hg) gebunden werden. Zusammen mit Trockenasche wird das Sorbat im Elektrofilter 18 abgeschieden.

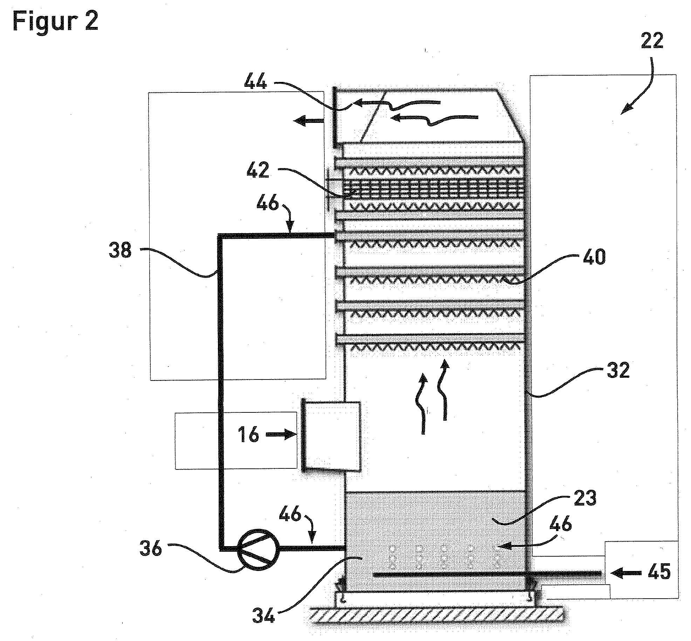

Anschließend wird das Rauchgas 16 in einer Rauchgasentschwefelungsanlage (REA) 22 gewaschen. Die Rauchgasentschwefelungsanlage 22 wird in der Regel als Nasswäscher 22 (siehe Figur 2) ausgeführt. In dem Nasswäscher 22 wird das Rauchgas 16 mittels einer Waschflüssigkeit 23 (siehe Figur 2), in der Regel Kalk- oder Kalkstein-haltige Suspension, gewaschen. Dabei entsteht im wesentlichen Calciumsulfat (Gips) 24 und schlammhaltiges Abwasser 26. Das gereinigte Rauchgas 16 verlässt als Reingas 28 das Kraftwerk z.B. durch einen Kamin 30.

Figur 2 zeigt einen, als Sprühturm 32 ausgeführten, Nasswäscher 22. Das Rauchgas 16 tritt oberhalb eines Wäschersumpfs 34 in den Sprühturm 32 ein. Im Wäschersumpf 34 sammelt sich die Waschflüssigkeit 23. Eine Pumpe 36 fördert die Waschflüssigkeit 23 aus dem Wäschersumpf 34 über die Steigleitung 38 zu einer oder mehreren Sprühebenen 40.

In der Sprühebene 40 wird die Waschflüssigkeit 23 zu feinen Tropfen zerteilt. Die Tropfen bewegen sich im Gegenstrom zum Rauchgas 16 nach unten, in Richtung des Wäschersumpfs 34. Dabei werden im Rauchgas 16 enthaltene gasförmige Stoffe, wie beispielsweise Schwefeldioxid oder Quecksilberionen bzw. Quecksilber-Halogenverbindungen, in der Waschflüssigkeit 23 gelöst und regnen mit den Tropfen in den Wäschersumpf 34 ab.

Das gereinigte Rauchgas 16 durchströmt im weiteren Verlauf einen Tropfenabscheider 42 und verlässt den Sprühturm 32 durch einen Austritt 44 an einem oberen Ende des Sprühturms 32. Der Tropfenabscheider 42 hält feinste Tröpfchen zurück, die mit dem Rauchgas 16 mitgerissen werden.

Das aus dem Rauchgas 16 abgeschiedene Schwefeldioxid (S02) reagiert mit der in der Waschflüssigkeit 23 enthaltenen Kalkmilch zu Calciumsulfit (CaSO3). In den Wäschersumpf 34 wird Luft 45 eingeblasen, so dass dort, das mit den Tropfen abgeregnete Calciumsulfit (CaSO3) mit dem in der Luft 45 enthaltenen Sauerstoff (02) zu Calciumsulfat (CaSO4) 24 aufoxidiert wird.

Das Quecksilber wird mit den Tropfen in den Wäschersumpf 34 getragen. Hierbei kommt es bereits im Tropfen, aber vor allem im Wäschersumpf zur Komplexierung des Quecksilbers. Darüber hinaus ist auch eine Adsorption an Feststoffen möglich. Bei der Quecksilber-Komplexierung sind verschiedene, in der Literatur beschriebene Mechanismen denkbar. Es ist aber auch möglich, dass oxidiertes und in der Suspension gelöstes Quecksilber zu elementarem Quecksilber reduziert wird.

Da diese Spezies im Gegensatz zu den Quecksilberionen nicht wasserlöslich ist, kann es nicht wie diese im Nasswäscher 22 abgeschieden werden, sondern wird wieder in die Gasphase freigesetzt. Eine Reduktion der Quecksilberionen zu elementarem Quecksilber wird dadurch verhindert, dass ein Fällungsmittel, beispielsweise das bekannte Trimercapto-S-Triazin Natriumsalz (TMT15®), eingesetzt wird.

Beispielhafte Orte, an denen das Fällungsmittel in den Prozess eingebracht werden kann, sind in der Figur 2 durch das Bezugszeichen 46 gekennzeichnet. Das Fällungsmittel kann beispielsweise direkt in den Wäschersumpf 34 eingebracht werden. Es ist auch denkbar, das Fällungsmittel in die Steigleitung 38 einzubringen. Der Einbringort 46 kann dabei auf einer Saugseite oder einer Druckseite der Pumpe 36 liegen. Vorzugsweise wird das Fällungsmittel so nahe wie möglich an einem Austritt der Suspension in der Sprühebene 40 eingebracht.

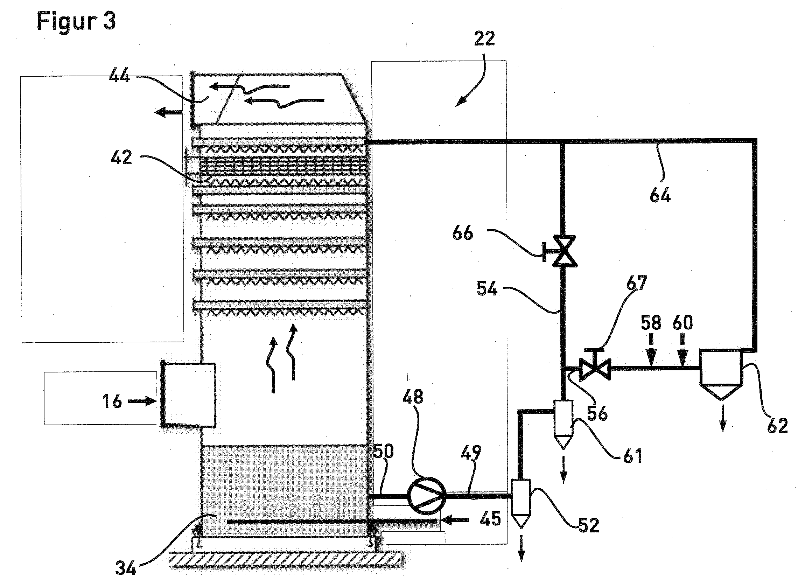

Figur 3 zeigt eine weitere Ausgestaltung der Erfindung in Form einer REA-Waschwasseraufbereitungsanlage (RWA). Dargestellt ist der Nasswäscher 22. Aus dem Wäschersumpf 34 wird mittels einer Umwälzpumpe 48 Waschflüssigkeit 23 entnommen und in einer Leitung 49 zu den Abscheidern 52 und 61 gefördert. Nach dem zweiten Abscheider 61 besteht die Möglichkeit, die Waschflüssigkeit über die Leitung 54 direkt zum Nasswäscher zurückzuführen, oder über die Leitung 56 in die REA-Waschwasseraufbereitungsanlage einzuleiten. In der Leitung 56 ist, in Strömungsrichtung gesehen, eine erste Dosierstelle 58 für das Fällungsmittel, danach eine zweite Dosierstelle 60 für ein Flockungshilfsmittel angeordnet.

Die Funktionsweise einer REA-Wasseraufbereitungsanlage mit zweistufiger Abtrennung von Gips aus der Waschflüssigkeit 23, umfassend die Umwälzpumpe 48, die Abscheider 52 und 61 (bevorzugt ausgeführt als Hydrozyklon) sowie den dritten Abscheider 62 (bevorzugt ausgeführt als Eindicker), die erste Dosierstelle 58, die zweite Dosierstelle 60 sowie die Absperrarmaturen 66 und 67 ist wie folgt:
Die Umwälzpumpe 48 fördert Waschflüssigkeit 23 aus dem Wäschersumpf 34 zum ersten Abscheider 52. Im ersten Abscheider 52 wird in der Waschflüssigkeit 23 enthaltener Feststoff zum überwiegenden Teil abgeschieden. Im zweiten Abscheider 61 erfolgt die Feststoffabtrennung so, dass der Oberlauf des Abscheiders 61 nur noch sehr geringe Feststoffanteile enthält. Diese bestehen nahezu vollständig aus Schmutzpartikeln. Der aus dem ersten und zweiten Abscheider 52, 61 austretenden Waschflüssigkeit 23 wird zunächst an der ersten Dosierstelle 58 das Fällungsmittel zudosiert und anschließend an der zweiten Dosierstelle 60 ein Flockungshilfsmittel zugegeben. Durch das Fällungsmittel wird das in der Suspension enthaltene Quecksilber gefällt. Anschließend werden die durch die Fällungsreaktion entstandenen schwerlöslichen Quecksilberverbindungen zusammen mit in der Waschflüssigkeit 23 noch vorhandenen Feststoffen durch das Flockungshilfsmittel zu einem quecksilberhaltigen Schlamm koaguliert.

Der quecksilberhaltige Schlamm wird im nachfolgenden dritten Abscheider 62, aus der Waschflüssigkeit 23 abgeschieden und damit aus dem Prozess ausgeschleust. Die gereinigte Waschflüssigkeit 23 wird zur Spülung des Tropfenabscheiders 42 in den Prozess zurückgegeben.

Auf diese Weise wird erreicht, dass sich das aus dem Rauchgas 16 abgeschiedene Quecksilber nicht in das Calciumsulfat (Gips) 24 einbindet, sondern zusammen mit dem Abwasserschlamm 26 aus dem Prozess ausgetragen wird. Außerdem wird durch die Absenkung des Quecksilberniveaus in der Waschflüssigkeit ein treibendes Gefälle für die erwünschten Reaktionen des Quecksilbers größer, so dass diese bevorzugt ablaufen und in Folge dessen die Abscheiderate erhöht wird.

Ein weiteres Ausführungsbeispiel sieht vor, dass anstelle der Komplexbildung von Quecksilberionen (Hg2+) mit Calciumsulfatmolekülen (CaSO4) im Wäschersumpf 34, die Quecksilberionen durch Zugabe von Additiven zur Waschflüssigkeit im Wäschersumpf 34 gebunden werden und dann mit dem Abwasserschlamm 26 aus dem Prozess ausgetragen werden.

Denkbare Additive sind hierbei kohlenstoff-, schwefel- oder kalziumbasiert. Es können entweder kommerzielle Produkte wie beispielsweise Aktivkohle oder Nebenprodukte aus dem Kraftwerk, beispielsweise Asche, oder anderen industriellen Prozessen verwendet werden.

Die Additive können entweder direkt in den Wäschersumpf 34 dosiert werden oder sie werden in einem Ansetzbehälter der Waschflüssigkeit 23 zugegeben und gelangen anschließend mit der Waschflüssigkeit 23 in den Wäschersumpf 34.

Ein weiteres Ausführungsbeispiel sieht vor, ein Quecksilber-Fällungsmittel, z.B. Trimercapto-S-Triazin Natriumsalz (TMT15®) an der Dosierstelle 46 der Waschflüssigkeit 23 zuzugeben. Nachfolgend wird das in der Waschflüssigkeit 23 vorliegende Fällungsprodukt, welches erfahrungsgemäß überwiegend an den vorhandenen Schmutzpartikeln anhaftet, der RWA zugeführt. Auf diese Weise wird erreicht, dass quecksilberhaltige Schmutzpartikel, deren Abtrennung vom Gips im Abscheider 52 nicht vollständig erfolgen kann, nicht in das Calciumsulfat (Gips) 24 eingebunden, sondern zusammen mit dem Abwasserschlamm 26 aus dem Prozess ausgetragen werden. Die Dosierung von Fällungsmittel 58 in die Leitung 56 kann in Abhängigkeit vom Hg-Anteil in der Waschflüssigkeit 54 erfolgen.

## Patentansprüche

1. Verfahren zur Abscheidung von Schwefeldioxid und Quecksilber aus Rauchgas (16), bei dem das Rauchgas (16) in einem Nasswäscher (2) mit einer calciumhaltigen Waschflüssigkeit(23) gewaschen wird und bei dem das gebildete Calciumsulfit (CaSO3) unter Zufuhr von Sauerstoff, welcher evtl. in Luft (45) enthalten ist, in Calciumsulfat (24) umgewandelt wird und danach calciumsulfathaltige Waschflüssigkeit (23) abgezogen wird und aus der abgezogenen Waschflüssigkeit (23) Calciumsulfat (24) abgetrennt wird, wobei die Waschflüssigkeit (23) Kohlenstoff und/oder Schwefelverbindungen enthält, **dadurch gekennzeichnet, dass** die Waschflüssigkeit (23) zu einer REA-Waschwasseraufbereitungsanlage mit zweistufiger Abtrennung von Gips aus der Waschflüssigkeit (23) umfassend eine Umwälzpumpe (48), einen Abscheider (52) und einen zweiten Abscheider (61) gefördert wird, dass der aus dem zweiten Abscheider (61) austretenden Waschflüssigkeit (23) in einer Leitung (56) an einer Dosierstelle (58) ein Fällungsmittel für Quecksilber zudosiert und anschließend an einer zweiten Dosierstelle (60) ein Flockungsmittel zugegeben wird, wobei die Leitung (56) in einen dritten Abscheider (62) mündet, und dass anschließend der durch die Fällungsreaktion entstandene quecksilberhaltige Schlamm in dem dritten Abscheider (62) aus der Waschflüssigkeit (23) abgeschieden und damit aus dem Prozess ausgeschleust wird.

2. Verfahren nach Anspruch 1, **dadurch gekennzeichnet, dass** der in der Waschflüssigkeit (23) enthaltene Kohlenstoff aus Kalkmilch aus Azetylen-Erzeugungsanlagen stammt.

3. Verfahren nach einem der vorangehenden Ansprüche,
**dadurch gekennzeichnet, dass** die in der Waschflüssigkeit (23) enthaltenen Schwefelverbindungen aus Kalkmilch aus Azetylen-Erzeugungsanlagen stammen.

4. Verfahren nach einem der vorhergehenden Ansprüche,
**dadurch gekennzeichnet, dass** der in der Waschflüssigkeit (23) enthaltene Kohlenstoff eine in einem Verbrennungsprozess entstandene Asche ist.

5. Verfahren nach einem der vorangehenden Ansprüche,
**dadurch gekennzeichnet, dass** der Kohlenstoff, zusammen mit dem Calciumsulfat (24) aus der Waschflüssigkeit (23) abgeschieden werden.

6. Verfahren nach einem der vorhergehenden Ansprüche,
**dadurch gekennzeichnet, dass** der Waschflüssigkeit (23) entsprechend dem Verbrauch Kalkmilch zugeführt wird.

7. Verfahren nach einem der vorhergehenden Ansprüche,
**dadurch gekennzeichnet, dass** der Waschflüssigkeit (23) entsprechend dem Verbrauch Kohlenstoff zugeführt wird.

8. Verfahren nach einem der vorhergehenden Ansprüche,
**dadurch gekennzeichnet, dass** der Waschflüssigkeit (23) ein Fällungsmittel für Quecksilber, bevorzugt Trimercapto-S-Triazin Natriumsalz (TMT15®), in einer Steigleitung (38) des Wäschers (22) zugegeben wird.

9. Verfahren nach einem der vorhergehenden Ansprüche,
**dadurch gekennzeichnet, dass** der Kohlenstoffanteil der Waschflüssigkeit (23) kleiner 5 Gew.-%, bevorzugt kleiner 3 Gew.-%, und besonders bevorzugt kleiner 1 Gew.-% ist.

## Claims

1. A method for separating sulfur dioxide and mercury from flue gas (16), in which the flue gas (16) is washed in a wet washer (2) with a calcium-containing rinse water (23), and in which the calcium sulfite formed is converted into calcium sulfate (24) by supplying oxygen, which may be contained in air (45), and after that, calcium sulfate-containing rinse water (23) is drawn off, and calcium sulfate (24) is separated off from the drawn-off rinse water (23), the rinse water (23) containing carbon and/or sulfur compounds, **characterized in that** the rinse water (23) is fed to an REA rinse water reprocessing plant with two-stage separation of plaster from the rinse water (23), including a recirculating pump (48), a separator (52) and a second separator (61); that a precipitation agent for mercury is metered in to the rinse water (23) that has emerged from the second separator (61), in a line (56) at a metering point (58), and next, a flocculant is added at a second metering point (60), and the line (56) opens into a third separator (62); and that next, the mercury-containing sludge in the third separator (62), which sludge is created as a result of the precipitation reaction, is precipitated out of the rinse water (23) and is thus discharged from the process.

2. The method of claim 1, **characterized in that** the carbon contained in the rinse water (23) derives from lime milk from acetylene production plants.

3. The method of one of the foregoing claims, **characterized in that** the sulfur compounds contained in the rinse water (23) derive from lime milk from acetylene production plants.

4. The method of one of the foregoing claims, **characterized in that** the carbon contained in the rinse water (23) is an ash that has occurred in a combustion process.

5. The method of one of the foregoing claims, **characterized in that** the carbon, together with the calcium sulfate (24), is precipitated out of the rinse water (23).

6. The method of one of the foregoing claims, **characterized in that** the rinse water (23) is replenished with lime milk in proportion to the consumption of the lime milk.

7. The method of one of the foregoing claims, **characterized in that** carbon is supplied in accordance with consumption to the rinse water (23).

8. The method of one of the foregoing claims, **characterized in that** a precipitating agent for mercury, preferably trimercapto-s-triazine sodium salt (TMT 15®), is added to the rinse water (23) in a riser line (38) of the washer (22).

9. The method of one of the foregoing claims, **characterized in that** the proportion of carbon in the rinse water (23) is less than 5 weight %, preferably less than 3 weight %, and especially preferably less than 1 weight %.

## Revendications

1. Procédé destiné à séparer, de gaz de combustion (16), le dioxyde de soufre et le mercure, dans lequel le gaz de combustion (16) est lavé dans un laveur par voie humide (2) avec un liquide de lavage (23) contenant du calcium et dans lequel le sulfite de calcium (CaSO3) formé est transformé en sulfate de calcium (24) en apportant de l'oxygène qui est contenu éventuellement dans de l'air (45), et, ensuite, on évacue du liquide de lavage (23) contenant du sulfate de calcium, et du sulfate de calcium (24) est séparé du liquide de lavage (23) évacué, le liquide de lavage (23) contenant du carbone et/ou des composés de soufre, **caractérisé par le fait que** le liquide de lavage (23) est transporté vers une station de traitement d'eau de lavage DGC à séparation à deux étages de gypse à partir du liquide de lavage (23), comprenant une pompe de recirculation (48), un séparateur (52) et un deuxième séparateur (61), qu'au liquide de lavage (23) sorti du deuxième séparateur (61) est ajouté de manière dosée, dans une conduite (56) sur un point de dosage (58), un précipitant pour le mercure et est ajouté ensuite, sur un deuxième point de dosage (60), un agent de floculation, ladite conduite (56) débouchant dans un troisième séparateur (62), et que, ensuite, la boue contenant du mercure qui résulte de la réaction de précipitation est séparée, dans ledit troisième séparateur (62), du liquide de lavage (23) et est ainsi éliminée du processus.

2. Procédé selon la revendication 1, **caractérisé par le fait que** le carbone contenu dans le liquide de lavage (23) provient de lait de chaux en provenance d'installations de production d'acétylène.

3. Procédé selon l'une quelconque des revendications précédentes, **caractérisé par le fait que** les composés de soufre contenus dans le liquide de lavage (23) proviennent de lait de chaux en provenance d'installations de production d'acétylène.

4. Procédé selon l'une quelconque des revendications précédentes, **caractérisé par le fait que** le carbone contenu dans le liquide de lavage (23) est une cendre produite dans un processus de combustion.

5. Procédé selon l'une quelconque des revendications précédentes, **caractérisé par le fait que** le carbone est séparé conjointement avec le sulfate de calcium (24) du liquide de lavage (23).

6. Procédé selon l'une quelconque des revendications précédentes, **caractérisé par le fait que** du lait de chaux est amené au liquide de lavage (23) en fonction de la consommation.

7. Procédé selon l'une quelconque des revendications précédentes, **caractérisé par le fait que** du carbone est amené au liquide de lavage (23) en fonction de la consommation.

8. Procédé selon l'une quelconque des revendications précédentes, **caractérisé par le fait que** l'on ajoute, au liquide de lavage (23), un précipitant pour le mercure, de préférence le sel de sodium de la trimercapto-s-triazine (TMT15®), dans une conduite ascendante (38) du laveur (22).

9. Procédé selon l'une quelconque des revendications précédentes, **caractérisé par le fait que** la proportion de carbone du liquide de lavage (23) est inférieure à 5 % en poids, de préférence inférieure à 3 % en poids et de manière particulièrement préférée inférieure à 1 % en poids.
